# NOUVEAU FASCICULE DE BREVET EUROPEEN

(11) **EP 2 257 502 B2**
(45) Date de publication et mention de la décision concernant l'opposition: **07.09.2022**
(45) Mention de la délivrance du brevet: 02.12.2015
(21) Numéro de dépôt: 09719815.4
(22) Date de dépôt: 27.02.2009
(51) Int. Cl.: C03B 37/04, D04H 1/42, D04H 1/74, D04H 13/00, D04H 1/4218, D04H 1/58, D04H 1/64, D04H 1/70, D04H 3/004, C03B 37/10, D04H 1/4226, C03C 3/00, C03C 25/00

(54) **PRODUIT A BASE DE FIBRES MINERALES ET SON PROCEDE D'OBTENTION**
PRODUKT AUF BASIS VON MINERALFASERN UND VERFAHREN ZU SEINER HERSTELLUNG
PRODUCT BASED ON MINERAL FIBRES AND PROCESS FOR OBTAINING SAME

(30) Priorité: 28.02.2008 FR 0851288
(43) Date de publication de la demande: 08.12.2010
(73) Titulaire: SAINT-GOBAIN ISOVER, 92400 Courbevoie (FR)
(72) Inventeur: LETOURMY, Arnaud, F-60280 MARGNY LES COMPIEGNE (FR); DOUCE, Jérôme, F-75010 Paris (FR); GOLETTO, Valérie, F-75013 Paris (FR); GILLES, Jérôme, F-94240 L'hay les Roses (FR)
(74) Mandataire: Saint-Gobain Recherche
(86) Numéro de dépôt international: PCT/FR2009/050327
(87) Numéro de publication internationale: WO 2009/112784

(56) Documents cités:
- EP-A- 0 091 381
- EP-A1- 1 457 612
- EP-A1- 2 257 503
- WO-A1-2009/112783
- FR-A- 1 370 771
- FR-A- 2 529 878
- FR-A- 2 576 671
- GB-A- 1 107 877
- US-A- 4 759 974
- US-A- 4 759 974
- US-A- 4 889 546
- US-A- 5 277 706
- US-A1- 2003 040 239
- US-A1- 2006 078 720

## Description

L'invention concerne les produits à base de laine minérale, telle que de la laine de verre, destinée à entrer notamment dans la composition de produits d'isolation thermique et éventuellement acoustique, plus particulièrement pour le doublage de parois et/ou de toitures.

Sur le marché de l'isolation, les fournisseurs souhaitent toujours proposer des produits de plus en plus performants en termes d'isolation thermique. La performance thermique d'un produit est généralement rendue par la connaissance de la conductivité thermique λ. On rappelle que la conductivité thermique λ d'un produit est la capacité du produit à se laisser traverser par un flux de chaleur; elle est exprimée en W/m.K. Plus cette conductivité est faible, plus le produit est isolant, et meilleure est donc l'isolation thermique.

Sur le marché actuel, les produits à base de fibres minérales qui sont en laine de roche ou en laine de verre se placent entre 0,040 et 0,035 W/m.K, voire au mieux à 0,032 W/m.K. A moins qu'il n'en soit spécifié autrement, la conductivité thermique est celle mesurée de façon conventionnelle à 10°C selon la norme ISO 8301.

D'autres solutions permettent d'obtenir une conductivité thermique de 0,032 W/m.K, voire même 0,031 W/m.K, mais il s'agit de produits totalement différents, tels qu'à base de polystyrènes expansés spéciaux. Or, l'invention se place uniquement dans le domaine des produits à base de fibres minérales.

Différents produits à base de fibres sont notamment décrits dans les documents US 2006/0078720, US 4759974, GB 1107877, US 2003/0040239 et US 4889546.

Les produits à base de laine minérale, en particulier de laine de verre, sont obtenus par un procédé connu de centrifugation interne associée à un étirage par un courant gazeux à haute température.

Ce procédé de formation de fibres consiste à introduire un filet de verre fondu dans un centrifugeur, encore appelé assiette de fibrage, tournant à grande vitesse et percé à sa périphérie par un très-grand nombre d'orifices par lesquels le verre est projeté sous forme de filaments sous l'effet de la force centrifuge. Ces filaments sont alors soumis à l'action d'un courant annulaire d'étirage à température et vitesse élevées qui est produit par un brûleur et qui longe la paroi du centrifugeur, courant qui les amincit et les transforme en fibres. Les fibres formées sont entraînées par ce courant gazeux d'étirage vers un dispositif de réception généralement constitué par une bande perméable aux gaz qui est associée à des moyens d'aspiration. Un liant nécessaire pour lier lés fibres en un produit laineux est pulvérisé sur les fibres pendant qu'elles sont tirées vers le dispositif de réception. L'accumulation de fibres sur le dispositif de réception sous l'effet de l'aspiration fournit un tapis de fibres dont l'épaisseur peut varier selon le produit final à obtenir.

Ce procédé de transformation du verre en fibres est extrêmement complexe et requiert l'équilibrage d'un grand nombre de paramètres variables. En particulier, la pression du brûleur ainsi que la vitesse du gaz d'étirage jouent un rôle important dans l'optimisation de l'affinage de fibres. La conception de l'assiette de fibrage est également un facteur important.

Généralement, les fibres obtenues par centrifugation interne présentent un diamètre moyen de 3 µm correspondant à un micronaire de 3 sous 5 grammes, ou encore un diamètre moyen de 2 µm (micronaire de 2,8 sous 5 grammes).

On rappelle que la finesse des fibres est déterminée par la valeur de leur micronaire (F) sous 5 g. La mesure du micronaire appelée aussi indice de finesse " rend compte de la surface spécifique grâce à la mesure de la perte de charge aérodynamique lorsqu'une quantité donnée de fibres extraites d'un matelas non ensimé est soumise à une pression donnée d'un gaz - en général de l'air ou de l'azote. Cette mesure est usuelle dans les unités de production de fibres minérales, est réalisée selon la norme DIN 53941 ou ASTM D 1448 et utilise un appareil dit " appareil micronaire ".

Toutefois un tel appareil présente une limite de mesure quant à une certaine finesse des fibres. Pour des fibres très fines, une finesse (« le micronaire ») peut être mesurée en l/min grâce à une technique connue et décrite dans la demande de brevet WO2003/098209. Cette demande de brevet concerne en effet un dispositif de détermination de l'indice de finesse de fibres comportant un dispositif de mesurage de l'indice de finesse, ledit dispositif de mesurage de l'indice de finesse étant pourvu d'une part, d'au moins un premier orifice relié à une cellule de mesure adaptée pour recevoir un échantillon constitué d'une pluralité de fibres et d'autre part, d'un second orifice relié à un dispositif de mesurage d'une pression différentielle située de part et d'autre dudit échantillon, ledit dispositif de mesurage de la pression différentielle étant destiné à être relié à un dispositif de production d'écoulement de fluide, caractérisé en ce que le dispositif de mesurage de l'indice de finesse comporte au moins un débitmètre volumétrique du fluide traversant ladite cellule. Ce dispositif donne des correspondances entre des valeurs « micronaire » et des litres par minute (l/mn).

A titre indicatif, on peut noter une relation de correspondance entre les valeurs micronaire et la valeur du diamètre moyen de l'échantillon de fibres. Globalement, une valeur micronaire d'environ 12 l/mn correspond à un diamètre moyen de 2,5 à 3 µm, une valeur de 13,5 l/mn correspond sensiblement à un diamètre moyen de 3 à 3,5 µm, et enfin 18 l/mn à environ 4 à 5 µm.

Des fibres fines d'environ 3 µm de diamètre moyen ont été réalisées pour certaines applications.

En particulier pour obtenir des voiles de verre de quelques millimètres d'épaisseur en vue de réaliser des filtres aérosols ou des séparateurs de batterie, le document WO 99/65835 propose un dispositif par centrifugation interne qui autorise ainsi l'obtention de fibres d'environ 3 µm de diamètre. Le dispositif de ce document comprend une assiette de centrifugation dotée d'orifices qui sont rassemblés en rangées, au moins deux rangées adjacentes ayant des orifices de diamètres différents et la hauteur de formation des fibres par l'assiette de centrifugation est inférieure ou égale à 35 mm. Mais ce type d'application pour filtres utilisant en outre des produits de très faible épaisseur, est très éloigné de l'application à des produits isolants thermiquement, et ne fait nullement référence à la notion de conductivité thermique.

Pour une autre application, en vue de produits d'isolation, on connaît du document EP1370496 un dispositif par centrifugation interne qui fournit des fibres fines dont le diamètre moyen n'est pas supérieur à 3,5 micromètres, avec 2,1 µm comme plus bas diamètre moyen obtenu. Dans ce but, le brûleur de ce dispositif présente certaines spécificités en combinaison avec une configuration particulière de l'assiette de centrifugation. L'assiette comprend ainsi au moins deux zones annulaires dont le nombre d'orifices par unité de surface est différent d'une valeur supérieure ou égale à 5 %, la distance entre les centres des orifices les plus proches voisins d'une même zone annulaire étant sensiblement constante sur l'ensemble d'une même zone annulaire, et cette distance variant d'une zone à une autre d'au moins 3 %, en étant décroissante du haut vers le bas de l'assiette en position de centrifugation.

Un tel dispositif qui engendre des fibres plus fines améliore la conductivité thermique des produits obtenus pour une densité équivalente à celle des produits usuels. L'exemple donné dans ce document est un produit d'épaisseur 80 mm qui fournit à faible densité (9 kg/m³) une conductivité assez bonne de 41,2 W/m.K.

Toutefois, on souhaite toujours améliorer la conductivité thermique d'un produit afin d'atteindre une performance d'isolation satisfaisante sans pour autant utiliser une épaisseur trop élevée. En effet, en fonction de la conductivité thermique du matériau constituant le produit, on doit adapter l'épaisseur du produit pour fournir une performance, qui s'exprime par une résistance thermique (notée R) la plus élevée possible.

Il est clair qu'avec le produit décrit dans le document précédent EP1370496, la volonté d'augmenter la résistance thermique conduirait à augmenter de manière significative l'épaisseur du produit ce qui ne serait pas compatible avec certaines applications d'isolation de bâtiment.

L'invention a donc pour but de proposer un produit d'isolation thermique à base de fibres minérales qui présente des propriétés améliorées d'isolation thermique de sorte qu'il puisse être utilisé dans des épaisseurs raisonnables pour l'application bâtiment à laquelle ce produit est destiné, ce produit présentant la propriété d'être fortement compressible en étant apte à recouvrir son épaisseur nominale, et pouvant de préférence se présenter sous forme de rouleau.

Selon l'invention, le produit d'isolation thermique qui est à base de laine minérale, est caractérisé en ce que les fibres présentent un micronaire inférieur à 10 l/mn, notamment d'au plus 9 l/min, de préférence inférieur à 7 l/mn, notamment compris entre 3 et 6 l/mn, le produit comporte des éléments réfléchissant et/ou absorbant l'infrarouge, et en ce que le produit présente une conductivité thermique inférieure à 30 mW/m.K. et en ce que les fibres sont à plus où moins 30° près parallèles aux grandes extensions du produit, dans une proportion d'au moins 75%.

Le produit se caractérise ainsi par un diamètre moyen des fibres inférieur à 2µm, voire même inférieur à 1 µm.

Il s'est avéré selon l'invention que, pour une application spécifique d'isolation thermique, on a réussi à fabriquer un produit renfermant des fibres encore plus fines que dans l'art antérieur, avec une structure telle que le produit se caractérise par une conductivité thermique encore meilleure que dans l'art antérieur. Les éléments réfléchissant et absorbant l'infrarouge sont destinés à ne pas transmettre la chaleur arrivant sur le produit pour abaisser ainsi le flux de chaleur traversant le produit, ce qui diminue alors la conductivité thermique du produit.

Le produit de l'invention permet incontestablement d'obtenir des performances d'isolation thermique améliorées, et fournit également par la finesse de ses fibres un produit plus doux, agréablement manipulable.

Selon une caractéristique, la densité du produit est d'au plus 35kg/m³, de préférence entre 20 et 30 kg/m³.

Les fibres sont dans une proportion d'au moins 75 %, sensiblement parallèles aux grandes extensions du produit présentant plutôt une forme sensiblement parallélépipédique rectangle. On entend par sensiblement parallèle, une disposition parallèle à plus ou moins 30° près. Cet agencement parallèle des fibres s'oppose ainsi à la transmission de chaleur à travers l'épaisseur du produit (perpendiculairement auxdits plans). On minimise la proportion de fibres orientées selon l'épaisseur du produit, conduisant de ce fait à éviter le phénomène de transmission de chaleur via les passages d'air ménagés entre ces fibres sous forme de cheminées.

La structure est une structure à base laine minérale composée de fibres, en particulier de verre, liées entre elles par un liant, et comporte des éléments réfléchissant et/ou absorbant l'infrarouge dans une proportion d'au moins 0,5 %, notamment comprise entre 1 et 10 %en poids du produit, en particulier entre 1 et 6 %, de préférence entre 2 et 6 %.

Il est souhaitable en vue de la destination du produit d'ajouter des additifs usuels du type huileux pour capturer la poussière, du type antistatique ou du type hydrofugeant tel que le silicone.

Les éléments réfléchissants et/ou absorbants sont par exemple des particules métalliques telles que de l'aluminium, éventuellement d'un autre métal tel que argent, cuivre, or, ou alliage métallique, tel que de l'acier. Ces particules peuvent être choisies parmi des pigments métalliques hydrodispersibles qui sont disponibles dans le commerce.

La dimension des éléments réfléchissants et/ou absorbants est comprise entre 5 et 25 µm.

Selon une autre caractéristique, l'épaisseur du produit est d'au moins 30 mm, notamment de 40 à 150 mm selon l'application souhaitée et la résistance thermique désirée.

Le produit de densité ne dépassant pas 35 kg/m³ se présente avantageusement sous forme de rouleau.

Par sa faible densité et en lui fournissant une épaisseur adéquate, le produit est apte à être fortement comprimé, en particulier pour faciliter ses conditions de transport, et apte à recouvrer son épaisseur nominale lorsqu'il est prêt à être utilisé dans sa destination finale.

Le produit est utilisé plus particulièrement pour le doublage dés parois et/ou des toitures dans le bâtiment.

Ce produit isolant thermiquement peut également être intégré à un système d'isolation acoustique.

Le produit est de préférence à base de fibres de verre, la proportion d'infibrés n'excédant pas 1 % pour limiter encore mieux les transferts thermiques.

Le verre est de préférence du verre borosilicocalcique, avec du bore dans une proportion inférieure à 10 % du poids de la composition verrière, et de préférence comprise entre 4 et 7 %.

Le produit de l'invention est plutôt obtenu par un procédé de fibrage par centrifugation interne, au moyen d'une installation de fibrage qui présente des paramètres de fibrage adaptés pour fournir des fibres à l'indice de finesse souhaité, et par pulvérisation sur les fibres d'une solution incluant les éléments réfléchissant et/ou absorbant l'infrarouge.

Selon l'invention, le procédé de fabrication de laine minérale est défini dans la revendication 13.

Selon une caractéristique, l'installation comporte une couronne pourvue d'une pluralité de trous par lesquels est pulvérisée une solution comprenant les éléments réfléchissant et/ou absorbant l'infrarouge.

Les éléments réfléchissant et/ou absorbant l'infrarouge sont par exemple des particules métalliques du type aluminium.

Ces éléments peuvent être distribués séparément ou non du liant projeté habituellement sur les fibres.

Selon une autre caractéristique, le procédé consiste à régler une combinaison de paramètres qui sont au moins, la pression du brûleur entre 450 et 750 mm CE, la rotation du centrifugeur à une vitesse supérieure à 2000 tours/minute, et la tirée de fibres par jour et par orifice du centrifugeur à au plus 0,5 kg, et de préférence à au plus 0,4 kg.

Pour une même configuration de centrifugeur selon l'invention, la pression du brûleur est ainsi de 500 mm CE (colonne d'eau), et d'au plus 750 mm CE, pour engendrer par exemple des fibres de micronaire de 5,5 l/min, et respectivement de 3,4 l/mn. Ces valeurs de pression n'engendrent pas trop de turbulence, est permettent un empilement régulier des strates de fibres sur le tapis de réception et fournissent une fibre qui est très avantageusement un peu plus longue.

Selon une caractéristique, le procédé de l'invention est tel que le débit du matériau fondu arrivant dans le centrifugeur est inférieur à 18 tonnes/jour pour un centrifugeur présentant un nombre d'orifices d'au moins 32000, et selon de préférence une combinaison d'un débit d'au plus 14 tonnes/jour et d'un nombre d'orifices pour le centrifugeur d'au moins 36000.

Le diamètre des assiettes est compris entre 200 et 800 mm, et de préférence égale à 600 mm.

Généralement, les assiettes qui présentent des diamètres de 600 mm n'excèdent pas 32000 orifices. L'invention fournit par contre une assiette dont le nombre d'orifices est sensiblement plus important que dans l'art antérieur augmentant le nombre d'orifices par unité de surface. La hauteur de la bande de perçage de l'assiette n'excède de préférence pas 35 mm.

Le centrifugeur contient deux zones annulaires ou plus superposées l'une à l'autre, les orifices du centrifugeur présentant d'une zone à une autre des rangées d'orifices de diamètre différent et le diamètre par rangée annulaire étant décroissant du haut vers le bas de la bande périphérique de l'assiette en position de centrifugation. Le diamètre des orifices est compris entre 0,5 et 1,1 mm.

Selon encore une autre caractéristique, la distance entre les centres des orifices voisins de la même zone annulaire est constante ou non dans toute une zone annulaire, et cette distance varie d'une zone à l'autre d'au moins 3 % ou même d'au moins 10 % et diminue du haut vers le bas de la bande périphérique de l'assiette en position de centrifugation, avec en particulier une distance comprise entre 0,8 mm et 2 mm.

Le procédé de l'invention fournit ainsi par l'introduction d'éléments réfléchissant et/ou absorbant l'infrarouge et par les réglages, essentiellement de la pression du brûleur, de la vitesse de rotation de l'assiette de centrifugation, et de manière non attendue de la tirée de matériau fondu par orifice et par jour de l'assiette de centrifugation, un produit dont les fibres sont particulièrement fines, selon un micronaire inférieur à 10 l/mn, avec pour plus de 65% des fibres un diamètre moyen inférieur à 1 µm, accompagné d'une conductivité thermique inférieure à 30 mW/m.K, ce que ne propose pas l'art antérieur.

En outre, pour contribuer à l'abaissement conséquent de la conductivité thermique, le procédé de l'invention réalise un agencement des fibres le plus à plat possible, c'est-à-dire selon une disposition des fibres qui est parallèle aux grandes extensions du produit.

Cet arrangement est en particulier obtenu par des caractéristiques relatives à la réception et à l'évacuation des fibres par un convoyeur prolongeant le tapis de réception. A cet effet, le procédé de l'invention consiste à régler la vitesse de défilement d'un convoyeur abouté au tapis de réception, supérieure à Ja vitesse de défilement dudit tapis de réception, notamment de plus de 10 % et de préférence d'au moins 15 %.

D'autres avantages et caractéristiques de l'invention vont à présent être décrits plus en détail en regard des dessins annexés sur lesquels :
- La figure 1 illustre une vue schématique en coupe verticale d'une installation de fibrage selon l'invention;
- La figure 2 illustre une vue schématique en coupe verticale du dispositif de fibrage de l'installation ;

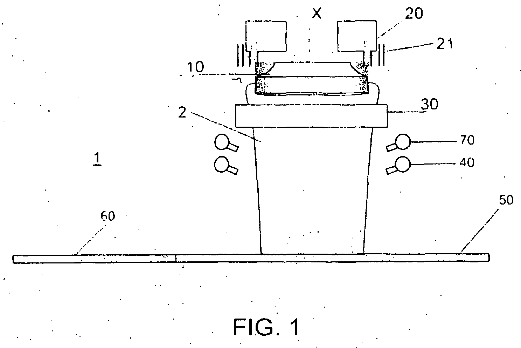

La figure 1 représente de façon schématique une vue en coupe transversale et selon un plan vertical d'une installation 1 de formation de matelas de laine minérale.

L'installation 1 comporte de manière connue d'amont en aval, ou de haut en bas selon le sens d'écoulement de la matière étirable à l'état fondu, un dispositif de centrifugation interne 10 qui délivre des filaments d'une matière étirable, un dispositif d'étirage 20 délivrant un courant gazeux qui transforme les filaments en fibres qui tombent sous la forme d'un voile 2, un inducteur 30 annulaire situé sous le dispositif de centrifugation 10, un dispositif d'amenée de liant 40, un tapis de réception 50 des fibres sur lequel s'accumulent les fibres pour constituer le matelas. Le matelas est ensuite acheminé vers une étuve pour la cuisson des fibres et du liant au moyen d'un tapis de convoyage 60 qui prolonge dans un même plan le tapis de réception 50.

Selon l'invention, l'installation comporte un dispositif de pulvérisation 70 d'éléments réfléchissant et/ou absorbant l'infrarouge qui se présente sous forme d'une couronne pourvue de trous de pulvérisation et disposée sous le dispositif de centrifugation 10 et l'inducteur 30 et en amont du dispositif d'amenée de liant 40.

En variante, le dispositif de pulvérisation pourrait être le dispositif d'amenée de liant, le liant comprenant les éléments réfléchissant et absorbant l'infrarouge.

Les éléments réfléchissants et absorbants sont sous forme de particules métalliques, du type aluminium. Les particules présentent par exemple une dimension moyenne de 10 à 18 µm. Elles présentent des dimensions supérieures à 2 µm, typiquement comprises entre 5 à 25 µm.

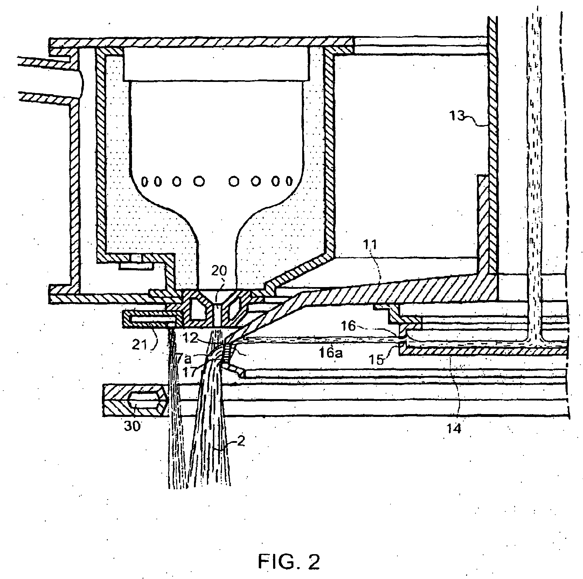

La figure 2 illustre plus en détail les dispositifs 10, 20 et 30 de l'installation de fibrage.

Le dispositif de centrifugation 10 comporte un centrifugeur 11, encore appelé assiette de fibrage, tournant à grande vitesse, sans fond dans sa partie inférieure, et percé au niveau de sa paroi périphérique 12 par un très grand nombre d'orifices par lesquels la matière fondue est projetée sous forme de filaments sous l'effet de la force centrifuge.

Le centrifugeur 11 sans fond est fixé à un moyeu en prise sur un arbre creux 13 de rotation selon un axe X monté vertical, l'arbre étant entraîné par un moteur non représenté.

Un panier 14 à fond plein est associé au centrifugeur en étant agencé à l'intérieur du centrifugeur de façon que son ouverture soit disposée en regard de l'extrémité libre de l'arbre creux 13 et que sa paroi 15 soit sensiblement éloignée de la paroi ou bande périphérique 12.

La paroi cylindrique 15 du panier est percée d'un petit nombre d'orifices 16 relativement gros, par exemple d'un diamètre de l'ordre de 3 mm.

Un filet de verre fondu alimente le centrifugeur en passant par l'arbre creux 13 et s'écoule dans le panier 14. Le verre fondu, par passage au travers des orifices 16 du panier, est alors distribué sous forme de filets primaires 16a et dirigés vers l'intérieur de la bande périphérique 12 d'où ils sont expulsés au travers des orifices 17 de l'assiette sous l'effet de la force centrifuge sous forme de filaments 17a.

Le dispositif d'étirage 20 est constitué d'un brûleur annulaire qui délivre un courant gazeux à température et vitesse élevées en longeant la paroi 12 du centrifugeur. Ce brûleur sert à maintenir la température élevée de la paroi du centrifugeur et contribue à l'amincissement des filaments pour les transformer en fibres.

Le courant gazeux d'étirage est généralement canalisé au moyen d'une nappe gazeuse froide enveloppante. Cette nappe gazeuse est produite par une couronne de soufflage 21 entourant le brûleur annulaire. Froide, elle permet de plus d'aider au refroidissement des fibres dont la résistance mécanique est ainsi améliorée par un effet de trempe thermique.

L'inducteur annulaire 30 chauffe le dessous du dispositif de centrifugation pour aider au maintien de l'équilibre thermique de l'assiette 11.

Le dispositif d'amenée de liant 40 est constitué d'une couronne au travers de laquelle s'écoule le voile de fibres 2. La couronne comporte une multiplicité de buses arrosant de liant le voile de fibres. De manière usuelle, le liant qui participe à la cohésion de fibres entre elles comporte des agents anti-poussière du type huileux, et des agents antistatiques.

La matière minérale que l'on transforme en fibre est généralement du verre.

Tout type de verre transformable par le procédé dit de centrifugation interne peut convenir. Toutefois, il est préféré selon l'invention un verre borosilicocalcique pour lequel la proportion de bore est inférieure à 10%, notamment comprise entre 2 et 9%, de préférence entre 4 et 7%.

Selon l'invention, l'obtention de fibres fines est réalisée par les réglages de différents paramètres que sont en particulier :
- la pression du brûleur 20 ;
- la vitesse de rotation de l'assiette 11 ;
- la tirée de fibres que fournit par jour chaque orifice 17 de l'assiette.

Le brûleur annulaire 20 est de conception standard. La température du jet gazeux à sa sortie est comprise entre 1350 et 1500°C, de préférence aux environs de 1400°C.

Selon l'invention, la pression du brûleur est réglée entre 450 et 750 mm CE (on rappelle que 1 mmCE = 9,81 Pa) pour engendrer un jet gazeux d'étirage le mieux adapté à la finesse des fibres souhaitée, en combinaison avec les autres paramètres précités. Si de manière usuelle, la pression d'un brûleur est de 500 mm CE, on peut choisir selon l'invention d'augmenter la pression pour amincir les fibres, ce qui demande toutefois davantage d'énergie. Un compromis entre les différents paramètres cités plus haut est à réaliser pour obtenir le produit souhaité en fonction des facteurs économique et énergétique entrant en ligne de compte.

Selon l'invention, la vitesse de rotation de l'assiette est plus rapide que celle usuelle de 1900 tours par minute (tr/mn). L'assiette de l'invention tourne à une vitesse supérieure à 2000 tr/mn, par exemple à 2200 tr/mn.

Selon l'invention, la tirée de fibres par orifice d'une assiette est d'au plus 0,5 kg par jour, et de préférence n'excède pas 0,4 kg/jour. La tirée de fibres par jour et par orifice correspond au débit de matière fondue traversant chaque orifice par jour.

Cette tirée est bien entendue liée au débit de matière fondue délivrée en amont du centrifugeur et au nombre d'orifices percés dans le centrifugeur. Selon l'invention, le débit de matière fondue n'excède pas 19 tonnes par jour (t/jour), et de préférence n'excède pas 14t/jour. Comparativement, la tirée usuelle d'un four délivrant du verre fondu est généralement de l'ordre de 23 à 25 tonnes par jour. Quant à l'assiette, elle comporte au moins 32000 orifices, de préférence au moins 36000 orifices, donc un nombre supérieur à celui d'une assiette standard qui est généralement de 31846.

L'assiette de centrifugation présente un diamètre préférentiel de 600 mm, mais pourrait être de 400 mm ou de 800 mm en adaptant en conséquence le nombre d'orifices et la tirée de matière fondue délivrée. L'assiette contient deux zones annulaires ou plus superposées l'une à l'autre, chaque zone étant pourvue d'une ou de plusieurs rangées annulaires d'orifices. Quelques caractéristiques particulières relatives à l'assiette peuvent par ailleurs aider à l'obtention de fibres fines.

La hauteur de bande de perçage de l'assiette, hauteur sur laquelle s'étalent les orifices, n'excède pas 35 mm.

Les orifices de l'assiette présentent d'une zone à une autre des rangées d'orifices de diamètre différent et le diamètre par rangée annulaire étant décroissant du haut vers le bas de la bande périphérique de l'assiette en position de centrifugation. Le diamètre des orifices est compris entre 0,5 et 1,1 mm.

La distance entre les centres des orifices voisins de la même zone annulaire est constante ou non dans toute une zone annulaire, cette distance varie d'une zone à l'autre d'au moins 3 % ou même d'au moins 10 % et diminue du haut vers le bas de la bande périphérique de l'assiette en position de centrifugation, avec en particulier une distance comprise entre 0,8 mm et 2 mm.

Selon l'invention, le liant distribué par la couronne 40 est avantageusement dosé inférieur à 8 %, et de préférence n'excédant pas 5% pour réaliser un produit apte à être roulé.

Avec le liant est distribué un additif réfléchissant les infra-rouges, sous la forme de particules métalliques telles que de l'aluminium. Les particules peuvent être incorporées au liant, ou amenées dans une phase aqueuse séparée pulvérisée sur les fibres à proximité du liant. Les particules sont présentes à hauteur de 0,5 à 2% en poids par rapport au poids des fibres. De telles particules se combinent tout particulièrement aux fibres obtenues ci-dessus pour conférer un abaissement de la conductivité thermique λ dans des gammes de densité de produit peu élevées, typiquement de 30 kg/m³ ou moins.

Enfin, l'abaissement de la conductivité thermique λ peut aussi être lié à l'arrangement des fibres dans le matelas. Une majorité supérieure à 75 %, voire même supérieure à 85 %, est disposée de manière sensiblement parallèle aux grandes extensions du produit. A cette fin, la vitesse de déplacement du tapis de convoyage 60 est selon l'invention plus rapide que la vitesse du tapis de réception 50, selon une proportion supérieure à 10 %, et de préférence au moins égale à 15 %.

Ce changement de vitesse avec accélération amène les fibres à se disposer le plus à plat possible dans le plan de défilement des tapis, en s'orientant donc parallèlement aux plus grandes extensions du matelas de fibres obtenu.

On présente ci-après un exemple de produit de l'invention obtenu conformément au procédé de l'invention. L'installation comporte une assiette de fibrage de 600 mm et 36000 orifices, avec un agencement et un diamètre des orifices tels que décrits plus haut. La tirée par orifice et par jour est de 0,4 kg. La vitesse de rotation de l'assiette est de 2200 tr/mn. La pression du brûleur est de 500 mm CE. La vitesse du convoyeur 60 est 15 % plus rapide que celle du tapis de réception. Des particules d'aluminium de diamètre moyen 12 µm sont appliquées sur les fibres au moyen d'une dispersion aqueuse, avec un dosage de 2% en poids d'aluminium par rapport aux fibres. Le produit obtenu présente les caractéristiques suivantes:
- indice de finesse des fibres de 5,5 l/mn,
- conductivité thermique de 29,6 mW/m.K, mesurée à 10°C selon la norme ISO 8301
- densité de 30 kg/m3
- teneur en liant de 5% en poids du produit,
- épaisseur de 45mm,
- les fibres sont à plus de 80% sensiblement parallèles aux grandes extensions.

La détermination de l'orientation des fibres est effectuée de la manière suivante : on prélève dans le produit plusieurs éprouvettes parallélépipédiques (notamment au moins 6) de même taille, d'épaisseur identique à l'épaisseur du produit. La découpe est réalisée au moyen d'un instrument tranchant tel qu'une lame produisant une découpe nette sans entraînement des fibres dans la direction de découpe, ne dénaturant ainsi pas l'agencement des fibres formant le produit avant découpe. Chaque éprouvette est observée selon sa tranche, la surface observée est divisées en surfaces unitaires de petites dimensions, et les fibres sont détectées visuellement dans chaque unité de surface, et l'on relève l'angle formé par la direction des fibres par rapport à une direction horizontale parallèle à une grande extension du produit et l'on calcule l'angle moyen dans chacune des surfaces. Un outil de capture d'image couplé à un logiciel de traitement d'image peut être utilisé à cet effet. Pour chaque éprouvette, on détermine ainsi la fraction de fibres présentant un angle d'orientation s'inscrivant dans un secteur angulaire donné. Puis on fait la moyenne des données de chaque éprouvette pour exprimer l'orientation des fibres dans te produit. Dans cet exemple, on a déterminé que 80% des relevés d'angles se trouvaient dans le secteur 0°-30°et 150°-180° (fibres horizontales), alors que 15% des relevés d'angles se trouvaient dans le secteur 30°-60°et 120°-150° (fibres obliques) et 5% des relevés d'angles se trouvaient dans le secteur 60°-90°et 90°-120° (fibres verticales).

En l'absence des particules d'aluminium, la conductivité thermique du produit est de 30,2 mW/m.K. L'invention permet ainsi de réaliser un abaissement de plus de 0,5 mW/m.K.

La conductivité peut encore être abaissée en ajustant la composition du verre, avec un verre riche en bore notamment. Le produit obtenu dans les mêmes conditions avec 2% en poids d'aluminium présente une conductivité thermique de 29,4 mW/m.K.

Par conséquent, l'intégration d'éléments réfléchissant et/ou absorbant l'infrarouge dans les fibres produites et la configuration de l'installation de fibrage selon plusieurs caractéristiques spécifiques, liées surtout à la rotation de l'assiette de fibrage, au brûleur, à la tirée de fibres, et complémentairement liées au tapis de réception et au convoyeur le suivant, ont permis de manière non évidente de fournir le produit d'isolation thermique de l'invention qui jusque là n'existait pas.

Le produit de l'invention par ses fibres très fines engendre l'avantage d'un toucher plus doux, rendant sa manipulation bien moins incommodante.

Le produit par sa conductivité thermique bien abaissée procure une isolation thermique encore plus performante et permet d'atteindre un niveau de résistance thermique optimal dans des épaisseurs raisonnables.

Enfin, le produit de l'invention par sa densité d'au plus 30 kg/m³ peut se présenter sous forme de rouleau et/ou peut être comprimé, est ainsi aisément transportable et manipulable pour être facilement découpé et mis en place comme voulu contre des parois à isoler.

## Revendications

1. Produit d'isolation thermique à base de laine minérale, **caractérisé en ce que** les fibres de ladite laine minérale présentent un micronaire inférieur à 10 l/mn, notamment d'au plus 9 l/min, de préférence inférieur à 7 l/mn, notamment compris entre 3 et 6 l/mn, **en ce que** ledit produit comporte des éléments réfléchissant et/ou absorbant l'infrarouge, **en ce que** ledit produit présente une conductivité thermique inférieure à 30 mW/m.K et **en ce que** les fibres sont, à plus ou moins 30° près, parallèles aux grandes extensions dudit produit, dans une proportion d'au moins 75%.

2. Produit d'isolation thermique selon la revendication 1, **caractérisé en ce qu'**il présente une densité d'au plus 35 kg/m3, de préférence entre 20 et 30 kg/m3.

3. Produit d'isolation thermique selon l'une quelconque des revendications précédentes, **caractérisé en ce que** les éléments réfléchissant et/ou absorbant l'infrarouge sont des particules métalliques, du type aluminium.

4. Produit d'isolation thermique selon l'une quelconque des revendications précédentes, **caractérisé en ce que** les éléments réfléchissant et/ou absorbant l'infrarouge sont dans une proportion comprise entre 1 et 10 % en poids du produit, de préférence entre 2 et 6 %.

5. Produit d'isolation thermique selon l'une quelconque des revendications précédentes, **caractérisé en ce que** les éléments réfléchissant et/ou absorbant l'infrarouge présentent une dimension comprise entre 5 et 25 µm.

6. Produit d'isolation thermique selon l'une quelconque des revendications précédentes, **caractérisé en ce qu'**il a une épaisseur supérieure ou égale à 30 mm, notamment de 40 à 150 mm.

7. Produit d'isolation thermique selon l'une quelconque des revendications précédentes, **caractérisé en ce qu'**il se présente sous forme de rouleau.

8. Produit d'isolation thermique selon l'une quelconque des revendications précédentes, **caractérisé en ce qu'**il est intégré à un système d'isolation acoustique.

9. Produit d'isolation thermique selon l'une quelconque des revendications précédentes, . **caractérisé en ce qu'**il est à base de fibres de verre avec une proportion d'infibrés inférieur à 1 %.

10. Produit d'isolation thermique selon l'une quelconque des revendications précédentes, **caractérisé en ce qu'**il est à base de verre borosilicocalcique, avec du bore dans une proportion inférieure à 10 % du poids de la composition verrière, et de préférence comprise entre 4 et 7 %.

11. Produit d'isolation thermique selon l'une quelconque des revendications précédentes, **caractérisé en ce qu'**il est obtenu à partir d'un procédé de fibrage par centrifugation interne et par dépôt sur les fibres d'éléments réfléchissant et/ou absorbant l'infrarouge.

12. Produit selon l'une quelconque des revendications précédentes, **caractérisé en ce qu'**il est utilisé dans le doublage des parois et/ou des toitures dans le bâtiment.

13. Procédé de fabrication de laine minérale à l'aide d'une installation comportant un dispositif par centrifugation interne qui comprend un centrifugeur (11) apte à tourner autour d'un axe X, notamment vertical et dont la bande périphérique (12) est percée d'une pluralité d'orifices (17) pour délivrer des filaments d'un matériau fondu, un moyen d'étirage gazeux à haute température sous forme d'un brûleur annulaire (20) qui assure l'étirage des filaments en fibres, et un tapis de réception (50) associé à des moyens d'aspiration pour réceptionner les fibres, **caractérisé en ce qu'**il consiste à régler une combinaison de paramètres qui sont au moins, la pression du brûleur entre 450 et 750 mm CE, la rotation du centrifugeur à une vitesse supérieure à 2000 tours/min, et la tirée des fibres par jour et par orifice du centrifugeur qui est d'au plus 0,5 kg, et de préférence d'au plus 0,4 kg, à déposer sur les fibres des éléments réfléchissant et/ou absorbant l'infrarouge, et à régler la vitesse de défilement d'un convoyeur abouté au tapis de réception, supérieure à la vitesse de défilement dudit tapis de réception

14. Procédé selon la revendication 13, **caractérisé en ce que** l'installation comporte une couronne (70) pourvue d'une pluralité de trous par lesquels est pulvérisée une solution comprenant les éléments réfléchissant et/ou absorbant l'infrarouge tels que des particules métalliques, du type aluminium.

15. Procédé selon la revendication 13 ou 14, **caractérisé en ce que** les éléments réfléchissant et/ou absorbant l'infrarouge sont déposés par la pulvérisation de liant sur les fibres.

16. Procédé selon la revendication 13 à 15, **caractérisé en ce que** le débit du matériau fondu arrivant dans le centrifugeur est inférieur à 18 tonnes/jour pour un centrifugeur présentant un nombre d'orifices d'au moins 32000, et de préférence selon une combinaison de débit d'au plus 14 tonnes/jour et d'un nombre d'orifices pour le centrifugeur d'au moins 36000.

17. Procédé selon l'une des revendications 13 à 16, **caractérisé en ce que** le centrifugeur présente un diamètre compris entre 200 et 800 mm.

18. Procédé selon l'une des revendications 13 à 17, dans lequel la vitesse de défilement du convoyeur abouté au tapis de réception a une vitesse supérieure à la vitesse de défilement dudit tapis de réception de plus de 10% et de préférence d'au moins 15%.

## Patentansprüche

1. Wärmedämmprodukt auf der Basis von Mineralwolle, **dadurch gekennzeichnet dass** die Fasern dieser Mineralwolle einen Micronaire von weniger als 10 l/min, besonders von höchstens 9 l/min, bevorzugt weniger als 7 l/min, insbesondere von zwischen 3 und 6 l/min aufweisen, dass dieses Produkt Infrarotstrahlung reflektierende und/oder absorbierende Bestandteile enthält, und dass dieses Produkt eine Wärmeleitfähigkeit von weniger als 30 mW/m.K aufweist, und dass die Fasern zu den parallelen Haupterstreckungen des Produktes um bis zu plus/minus 30° abweichen, in einem Anteil von wenigstens 75%.

2. Wärmedämmprodukt nach Anspruch 1, **dadurch gekennzeichnet, dass** es eine Dichte von höchstens 35 kg/m³, bevorzugt von zwischen 20 und 30 kg/m³ aufweist.

3. Wärmedämmprodukt nach einem der vorherigen Ansprüche, **dadurch gekennzeichnet, dass** die Infrarotstrahlung reflektierenden und/oder absorbierenden Bestandteile metallische Partikel sind, vom Typ Aluminium.

4. Wärmedämmprodukt nach einem der vorherigen Ansprüche, **dadurch gekennzeichnet, dass** die Infrarotstrahlung reflektierenden und/oder absorbierenden Bestandteile in Anteilen von 1 bis 10% bezogen auf das Gewicht des Produktes, bevorzugt von 2 bis 6% vorliegen.

5. Wärmedämmprodukt nach einem der vorherigen Ansprüche, **dadurch gekennzeichnet, dass** die Infrarotstrahlung reflektierenden und/oder absorbierenden Bestandteile eine Größe von 5 bis 25 µm aufweisen.

6. Wärmedämmprodukt nach einem der vorherigen Ansprüche, **dadurch gekennzeichnet, dass** es eine Dicke von mehr als oder gleich 30 mm, insbesondere von 40 bis 150 mm, aufweist.

7. Wärmedämmprodukt nach einem der vorherigen Ansprüche, **dadurch gekennzeichnet, dass** es in Form einer Rolle vorliegt.

8. Wärmedämmprodukt nach einem der vorherigen Ansprüche, **dadurch gekennzeichnet, dass** es in ein Schalldämmsystem integriert ist.

9. Wärmedämmprodukt nach einem der vorherigen Ansprüche, **dadurch gekennzeichnet, dass** es auf Glasfasern basiert, deren Anteil an unzerfasertem Material weniger als 1% beträgt.

10. Wärmedämmprodukt nach einem der vorherigen Ansprüche, **dadurch gekennzeichnet, dass** es auf Basis eines Kalziumborosilikat-Glases gebildet ist, mit einem Borgehalt kleiner 10% der Glaszusammensetzung, bevorzugt zwischen 4 und 7%.

11. Wärmedämmprodukt nach einem der vorherigen Ansprüche, **dadurch gekennzeichnet, dass** es durch ein Verfahren der inneren Zentrifugierung und durch Ablage von die Infrarotstrahlung reflektierenden und/oder absorbierenden Bestandteilen auf den Fasern erhalten wird.

12. Produkt nach einem der vorherigen Ansprüche, **dadurch gekennzeichnet, dass** es im Bauwesen für die Außendämmung von Wänden und/oder Bedachungen verwendet wird.

13. Verfahren zur Herstellung von Mineralwolle mittels einer Anlage mit einer Vorrichtung zum inneren Zentrifugieren, welche ein um eine insbesondere vertikale Achse X drehbares Schleuderorgan (11), dessen Umfangsmantel (12) von einer Vielzahl von Öffnungen (17) zum Ausgeben von Filamenten eines Schmelzematerials durchsetzt ist, eine Einrichtung zum Hochtemperatur-Gasziehen in Form eines Ringbrenners (20), der das Ausziehen der Filamente zu Fasern bewirkt, sowie ein Ablageband (50) für die Ablage der Fasern, das Ansaugeinrichtungen zugeordnet ist, aufweist, wobei das Verfahren **dadurch gekennzeichnet ist, dass** es darin besteht, eine Kombination von Parametern zu regeln, bei denen es sich zumindest um den Brennerdruck von zwischen 450 und 750 mm WS, die Drehung des Schleuderorgans mit einer Geschwindigkeit von mehr als 2000 U/min, und die Faserziehrate pro Tag und Öffnung des Schleuderorgans von höchstens 0,5 kg und bevorzugt von höchstens 0,4 kg handelt, Infrarotstrahlung reflektierende und/oder absorbierende Bestandteile auf den Fasern abzulegen sowie dadurch, die Laufgeschwindigkeit eines Förderbands, welches an das Ablageband anschließt, so zu regeln, dass diese schneller als die Laufgeschwindigkeit dieses Ablagebandes ist.

14. Verfahren nach Anspruch 13, **dadurch gekennzeichnet, dass** die Vorrichtung einen Kreisring (70) mit einer Vielzahl von Öffnungen aufweist, durch die eine Lösung versprüht wird, die die Infrarotstrahlung reflektierenden und/oder absorbierenden Bestandteile wie metallische Partikel, vom Typ Aluminium, enthält.

15. Verfahren nach Anspruch 13 oder 14, **dadurch gekennzeichnet, dass** die Infrarotstrahlung reflektierenden und/oder absorbierenden Bestandteile durch Versprühen eines Bindemittels auf die Fasern abgelegt werden.

16. Verfahren nach einem der Ansprüche 13 bis 15, **dadurch gekennzeichnet, dass** der Durchsatz des im Schleuderorgan eintreffenden Schmelzematerials bei einem Schleuderorgan mit einer Anzahl von Öffnungen von mindestens 32000 weniger als 18 t/Tag beträgt, und zwar bevorzugt gemäß einer Kombination aus einem Durchsatz von höchstens 14 t/Tag und einer Anzahl von Öffnungen für das Schleuderorgan von mindestens 36000.

17. Verfahren nach einem der Ansprüche 13 bis 16, **dadurch gekennzeichnet, dass** das Schleuderorgan einen Durchmesser von zwischen 200 und 800 mm aufweist.

18. Verfahren nach einem der Ansprüche 13 bis 17, wobei die Laufgeschwindigkeit des Förderbands, welches an das Ablageband anschließt, um mehr als 10% und bevorzugt mindestens 15% schneller als die Laufgeschwindigkeit dieses Ablagebandes ist.

## Claims

1. A thermal insulation product based on mineral wool, **characterized in that** the fibers have a micronaire of less than 10 l/min, especially of at most 9 l/min, preferably less than 7 l/min, especially between 3 and 6 l/min, **in that** said product includes infrared absorbent and/or reflective elements, **in that** said product has a thermal conductivity of less than 30 mW/m.K and **in that** the fibers are, to within plus or minus 30°, parallel to the long extension of said product, in a proportion of at least 75%.

2. The thermal insulation product as claimed in claim 1, **characterized in that** it has a density of at most 35 kg/m³, preferably between 20 and 30 kg/m³.

3. The thermal insulation product as claimed in any one of the preceding claims, **characterized in that** the infrared absorbent and/or reflective elements are metal particles of the aluminum type.

4. The thermal insulation product as claimed in any one of the preceding claims, **characterized in that** the infrared absorbent and/or reflective elements are in a proportion of between 1 and 10%, preferably between 2 and 6%, by weight of the product.

5. The thermal insulation product as claimed in any one of the preceding claims, **characterized in that** the infrared absorbent and/or reflective elements have a size of between 5 and 25 µm.

6. The thermal insulation product as claimed in any one of the preceding claims, **characterized in that** it has a thickness equal to or greater than 30 mm, especially 40 to 150 mm.

7. The thermal insulation product as claimed in any one of the preceding claims, **characterized in that** it takes the form of a roll.

8. The thermal insulation product as claimed in any one of the preceding claims, **characterized in that** it is integrated into an acoustic insulation system.

9. The thermal insulation product as claimed in any one of the preceding claims, **characterized in that** it is based on glass fibers with a proportion of unfiberized material of less than 1%.

10. The thermal insulation product as claimed in any one of the preceding claims, **characterized in that** it is based on lime-borosilicate glass, with a boron content of less than 10%, and preferably between 4 and 7%, by weight of the glass composition.

11. The thermal insulation product as claimed in any one of the preceding claims, **characterized in that** it is obtained from an internal centrifugation fiberizing process and by deposition of infrared absorbent and/or reflective elements on the fibers.

12. The product as claimed in any one of the preceding claims, **characterized in that** it is used in the lining of walls and/or roofs in the building industry.

13. A mineral wool manufacturing process using an installation comprising an internal centrifugation device that comprises a spinner (11) capable of rotating about an axis X, especially a vertical axis, and the peripheral band (12) of which is drilled with a plurality of orifices (17) for delivering filaments of a molten material, a high-temperature gas attenuating means in the form of an annular burner (20), which attenuates the filaments into fibers, and a receiving belt (50) associated with suction means for receiving the fibers, **characterized in that** said process consists in controlling a combination of parameters, these being, at least, the pressure of the burner between 450 and 750 mm WC, the rotation of the spinner at a speed greater than 2000 revolutions/minute and the daily fibre output per spinner orifice, which is at most 0.5 kg and preferably at most 0.4 kg, in depositing infrared absorbent and/or reflective elements on the fibres, and in regulating the run speed of a conveyor butted onto the receiving belt, which is greater than the run speed of the receiving belt.

14. The process as claimed in claim 13, **characterized in that** the installation comprises a ring (70) provided with a plurality of holes through which a solution comprising the infrared absorbent and/or reflective elements, such as metal particles of the aluminum type, are sprayed.

15. The process as claimed in claim 13 or 14, **characterized in that** the infrared absorbent and/or reflective elements are deposited by spraying a binder on the fibers.

16. The process as claimed in one of claims 13 to 15, **characterized in that** the throughput of molten material entering the spinner is less than 18 tonnes/day for a spinner having at least 32 000 orifices, and preferably in a combination of throughput of at most 14 tonnes/day and of a spinner with at least 36 000 orifices.

17. The process as claimed in one of claims 13 to 17, **characterized in that** the spinner has a diameter of between 200 and 800 mm.

18. Process as claimed in one of claims 13 to 17, in which the run speed of the conveyor butted onto the receiving belt has a speed which is greater than the run speed of said receiving belt by more than 10% and preferably by at least 15%.
